# EUROPEAN PATENT APPLICATION

(11) **EP 4 336 855 A1**
(43) Date of publication of application: **13.03.2024**
(21) Application number: 22195240.1
(22) Date of filing: 12.09.2022
(51) Int. Cl.: H04N 23/10, H04N 23/20, H04N 23/52, H04N 23/55, H04N 25/10, H01L 27/14, H01L 21/02

(54) **DETECTOR, DEVICE AND METHOD FOR IMAGING IR AND/OR MICROWAVE IRRADIATION**

(30) Priority: 07.09.2022 EP 22194471
(71) Applicant: Biomimetics Technologies Inc., Toronto, ON M6S 2X4 (CA)
(72) Inventor: Israelowitz, Meir, 30625 Hannover (DE); Weyand, Brigit, 30625 Hannover (DE); Schroeder, Herbert P., Toronto, Ontario M6S 2X4 (CA); Rizvi, Syed, Lake Mary, Florida 32746 (US)
(74) Representative: Taruttis, Stefan Georg

(57) **Abstract**

The present invention relates to a detector, device and a method for imaging infrared (IR) and/or microwave irradiation. The detector and resp. the device is set up to detect at least two wavelengths of IR and/or microwave irradiation from incident irradiation and for each wavelength to generate a separate image. By overlaying the separate images, the device generates a picture which is sharper and/or has less noise than can be obtained by devices from prior art. The device can be used as a camera for generating infrared and/or microwave pictures.

## Description

The present invention relates to a detector, a device and a method for imaging infrared (IR) and/or microwave irradiation, and to a method for producing the detector and the device. The device is set up to select at least two different wavelengths of IR irradiation and/or of microwave irradiation from incident irradiation, to move and direct or resp. scan the incident irradiation over a detector, to detect the at least two wavelengths and for each wavelength to generate a separate image. By scanning the incident irradiation over the detector and by overlaying the separate images, the device generates a picture which is sharper and/or has less noise, e.g. in comparison to a picture that can be obtained e.g. by devices that detect only one wavelength. The device can be used as a camera for generating infrared and/or microwave pictures.

### State of the Art

EP 2 051 303 B1 describes a method for producing a microchip having an array of blind holes, wherein semiconductor crystals are arranged in the blind holes and the microchip surface is covered by a net of microwires.

### Object of the invention

The invention has the object to provide an alternative detector, device and method for the imaging of infrared irradiation, preferably a device and method for generating infrared pictures that are sharper and/or have less noise than can be obtained by devices from prior art, preferably essentially at room temperature, or e.g. at 1 °C or less below ambient temperature.

### Description of the invention

The invention achieves the object by the features of the claims and in particular by a device for imaging incident irradiation, which is selected from infrared (IR) and/or microwave irradiation, the device comprising a wavelength selector, a scanning unit and a detector, which are arranged along a common optical path, wherein
- the wavelength selector is set up to select at least two wavelengths from the range of IR irradiation and/or microwave irradiation from incident irradiation,
- the scanning unit is set up to move and direct incident irradiation over the detector and
- the detector is set up to detect incident irradiation of the first wavelength to generate corresponding first electrical signals, to detect incident irradiation of the second wavelength to generate corresponding second electrical signals and to transfer the first and second electrical signals to an analysing unit,
- which analysing unit is set up
   - to receive the first and second electrical signals from the detector,
   - to generate a first image from the first electrical signals and to separately generate a second image from the second electrical signals, and
   - to generate a positionally accurate overlay of the first image with the second image as a first picture,
- an optional cooling unit is set up to cool the scanning unit and/or the detector and/or the entire device to a temperature of up to 70 K below ambient temperature, preferably up to 25 K, up to 10 K, up to 5 K, or up to 1 K below ambient temperature, or resp. to a maximum absolute temperature of 250 K, or preferably of 280 K, 290 K or 300 K,
- optionally, the wavelength selector, scanning unit, detector and cooling unit of the device are all arranged in a common housing which can have the same temperature or can be temperature-controlled to one common temperature, e.g. 1 K below ambient temperature, by the optional cooling unit.

Further, the invention provides a method for imaging infrared and/or microwave irradiation and generating a picture comprising the steps of
a. from incident irradiation, selecting at least two wavelengths from the range of infrared (IR) and/or microwave irradiation, the wavelengths having at least a first wavelength and a second wavelength, e.g. by means of a wavelength selector which is arranged in the optical path of the incident irradiation,
b. moving and directing the incident irradiation over a detector, e.g. by means of a scanning unit which is arranged in the optical path of the incident irradiation,
c. detecting incident irradiation comprising the at least two wavelengths to generate at least two corresponding electrical signals and transferring the at least two electrical signals to an analysing unit, e.g. by means of a detector which is arranged in the optical path of the incident irradiation,
d. generating at least two corresponding images from the at least two electrical signals, e.g. by means of an analysing unit, and
e. generating a positionally accurate overlay of the at least two images to generate a first picture, e.g. by means of an analysing unit,
f. optionally interpreting and editing the first picture with a neural network to generate a second picture,
wherein steps a. and b. can be in the sequential order or in reverse order.

Preferably, the method is carried out using the device. Generally, the device is set up to carry out the method.

As described herein, the at least two wavelengths which are selected by the wavelength selector are wavelengths of the range comprising or consisting of IR and/or microwave irradiation to be selected by the wavelength selector and/or to be detected by the detector from incident irradiation, and comprise at least a first wavelength and a second wavelength. Generally, each one of the at least two wavelengths is a wavelength in the range of IR irradiation or microwave irradiation, each wavelength independently in the range of between 2 µm and 100 mm, in particular each IR irradiation wavelength independently in the range of between 2 µm and 300 µm, especially at least 2 µm, preferably at least 5 µm, at least 10 µm up to 300 µm, preferably up to 100 µm or up to 20 µm, and each microwave irradiation wavelength independently in the range of between 1 and 100 mm, especially at least 1 mm, preferably at least 2 mm, at least 5 mm or at least 10 mm up to 100 mm, preferably up to 80 mm, up to 50 mm or up to 25 mm.

The at least two wavelengths can both or resp. all be wavelengths of IR irradiation, which generally comprises wavelengths in the range of between 2 and 300 µm. Alternatively, the at least two wavelengths can both or resp. all be wavelengths of microwave irradiation, which generally comprises wavelengths in the range of between 1 and 100 mm. Further alternatively, at least one of the at least two wavelengths can be an IR irradiation wavelength and at least one other wavelength can be a microwave irradiation wavelength.

Each of the at least two wavelengths independently can have a bandwidth of up to ± 10 % of the wavelength, preferably up to ± 5 % or up to ± 1 %. As an illustrating example, a selected wavelength of 100 µm can have a bandwidth from 90 µm to 110 µm, preferably from 95 µm to 105 µm or from 99 µm to 101 µm. One of the selected wavelengths can e.g. be 50 µm ± 1 µm, i.e. the wavelength selector selectively transmits incident irradiation having a wavelength between 49 µm and 51 µm.

Generally, the at least two wavelengths do not overlap. In particular, each of the at least two wavelengths differ from one another by at least 25 % of the shorter wavelength, preferably by at least 50 % or by at least 100 %, by at least 150 %, by at least 200 %, by at least 300 %, by at least 500 % or by at least 1000 % of the shorter wavelength. In an exemplary embodiment in which the shorter, e.g. the first, wavelength is 100 µm, the longer, e.g. the second, wavelength is at least 125 µm, preferably at least 150 µm.

The wavelength selector is set up to select, i.e. to selectively transmit, reflect or e.g. deflect, the at least two wavelengths independently, e.g. simultaneously or sequentially, from incident irradiation. For example, the wavelength selector can be only transparent for the at least two wavelengths, and non-transparent for incident irradiation having other wavelengths. The wavelength selector can comprise or consist of at least one optical filter, or e.g. a pinhole, or can be an optical grid, or can be any optical device which is set up to focus incident irradiation onto the detector and/or which is set up to increase the signal-to-noise ratio of incident irradiation. Preferably, the wavelength selector comprises or consists of at least two long-pass or band-pass filters, each for one of the selected wavelengths. The at least one optical filter is preferably made of plastic, in particular a polyester or polyethylene, e.g. tsurupica (picarin), or can e.g. be made of poly tetrafluoro polyethylene (Teflon).

Optionally, the wavelength selector is set up to select at least one further wavelength of IR and/or microwave irradiation from incident irradiation, each sequentially one after another or simultaneously with at least one other of the at least two wavelengths. A device selecting for at least one further wavelength has the advantage that by overlaying images from more than two wavelengths, the resulting picture has further improved quality because the noise and/or blur of the picture is further reduced for each additional wavelength. Accordingly, the method in step a. optionally further comprises selecting IR and/or microwave irradiation having at least one further wavelength from incident irradiation, each sequentially one wavelength after another or at least two wavelengths simultaneously, in step c. further comprises detecting at least one further wavelength to generate at least one further electrical signal and to transfer the at least one further electrical signal to the analysing unit, in step d. further comprises separately generating at least one further image from the at least one further electrical signal, and in step e. the first picture is generated by overlaying the first image with the second image and with the at least one further image.

The wavelength selector together with the scanning unit and the detector is arranged within a common optical path of the incident irradiation which comprises or consists of IR irradiation and/or microwave irradiation, so that incident irradiation having one of the at least two wavelengths passes through the wavelength selector to hit and be received by the detector, while incident irradiation of other wavelengths is not selected but e.g. blocked or deflected by the wavelength selector and does not hit and is not received by the detector. Preferably, the wavelength selector is arranged in a non-rotatable or resp. fixed manner. Further preferably, the wavelength selector along the optical path is arranged at a fixed distance from the scanning unit and/or detector.

The wavelength selector is preferably arranged in the optical path upstream of the scanning unit and the detector, so that incident irradiation, e.g. emitted from an object, along its optical path first passes the wavelength selector, and only afterwards passes the scanning unit to hit and be received by the detector. Alternatively, the wavelength selector can be arranged in the optical path between the scanning unit and the detector, i.e. upstream of the detector and downstream of the scanning unit. In this embodiment, the wavelength selector is preferably formed as a pinhole or a slit.

Optionally, the wavelength selector is set up to select for polarized irradiation, e.g. in that the wavelength selector comprises at least one polarization filter. Therein, at least one of the at least two wavelengths is polarized irradiation, e.g. linearly polarized or circularly polarized.

It is preferred that the wavelength selector comprises at least two optical filters, e.g. one separate optical filter for each of the at least two wavelengths, with each optical filter to be transparent only for the corresponding wavelength, wherein preferably the optical filters can be arranged in the optical path of the device in a pivotable manner, i.e. each optical filter can be independently arranged in the optical path of the device e.g. by separately moving, e.g. by pivoting, optical filters into the optical path.

It is generally preferred that the method in step a. comprises selecting the at least two wavelengths in a sequential manner, i.e. one wavelength at a time. Therein, it is preferred that the wavelength selector comprises at least two optical filters, each corresponding to one of the at least two wavelengths. Therein preferably, a first optical filter is moved, e.g. pivoted, into the optical path in order to select the first wavelength, and after selecting the first wavelength the first optical filter is moved out of the optical path and a second optical filter is moved into the optical path in order to select the second wavelength. Optionally, when selecting the at least one further wavelength, at least one additional optical filter can sequentially be moved into and out of the optical path.

Alternatively, step a. can comprise selecting more than one, preferably all of the at least two wavelengths at the same time.

Optionally, the device comprises a pinhole that is set up to limit the beam width of incident irradiation. The pinhole is preferably arranged in the common optical path upstream of the wavelength selector, and has a diameter of up to 10 µm, preferably up to 5 µm or up to 1 µm, e.g. 1.5 µm. A device having a pinhole has the advantage that the detected signals have a higher resolution and especially less thermal noise than signals detected with a device without a pinhole.

The device further comprises a scanning unit which along with the wavelength selector and the detector is arranged along a common optical path and is set up to move and direct incident irradiation over the detector. The incident irradiation can consist of the at least two wavelengths, e.g. in a device having a wavelength selector upstream of the scanning unit in the optical path. A device having a scanning unit has the advantage that through focussing of the signal onto parts of the detector, the signal strength is increased while simultaneously the thermal noise is decreased, which in turn leads to infrared and/or microwave pictures of higher quality than in devices without a scanning unit.

The scanning unit is preferably set up to move and direct incident irradiation onto the detector in a scanning manner, e.g. by being driven to move and/or rotate and/or pivot in the optical path against the detector. Therein, the scanning can be a raster scanning, or can be a rotational scanning, or a triangulation scanning.

Preferably, the scanning unit is rotatable about its rotational axis, wherein the rotational axis corresponds to the optical path in the area of the scanning unit, e.g. is driven to rotate by means of at least one motor that is set up to rotate and/or pivot the scanning unit. Therein, the scanning unit preferably is driven to rotate at a speed of at least 0.1 rotations per second, preferably at least 0.5, at least 1 or at least 5 rotations per second, e.g. up to 100 rotations per second, preferably up to 90, up to 50 or up to 10 rotations per second.

In a preferred embodiment, the scanning unit comprises or consists of a double prism, in particular a double prism which is driven to rotate, wherein preferably the device is set up to rotate and/or move and/or pivot the prisms of the double prism relative to one another, e.g. by means of at least one motor that is set up to move the prisms of the double prism independently from one another or in a concerted manner. In this embodiment, the device has the advantage that the signal strength of the detected incident irradiation is increased and that the signal-to-noise ratio of the detection is increased as well, each compared to a device without a double prism. Preferably, the prisms of the double prism comprise or consist of silicon. Further preferably, the prisms of the double prism have a maximum extent of 0.5 to 5 cm, e.g. 1 cm. Still further preferably, the prisms of the double prism are arranged at a distance of at least 0.5 cm and/or up to 10 cm from one another, e.g. at least 3 cm and/or up to 9 cm.

In a preferred embodiment, the scanning unit is fully rotatable by 360° about its rotational axis in a clockwise and/or counter-clockwise direction, e.g. the scanning unit can be rotatable by 360° in a clockwise direction and subsequently rotatable by 360° in a counter-clockwise direction around the rotational axis. In this embodiment, the scanning unit is set up to move and direct or resp. scan incident irradiation having the first wavelength fully over 360° over the detector, and to simultaneously or subsequently move and direct or resp. scan incident irradiation having a second wavelength fully over 360° over the detector, and optionally to simultaneously or subsequently move and direct or resp. scan incident irradiation having the at least one further wavelength over the detector. Therein, it is preferred that one 360° rotation of the scanning unit corresponds to one scan fully over 360° over the detector. In this embodiment, the device has the advantage that it is simpler in construction, especially compared to raster scanning devices from prior art, and that the signal generated by the device has a higher resolution than a signal from a similar device without rotatable scanning unit. In this embodiment, it is further preferred that the scanning unit is coupled to the wavelength selector in that upon one rotation of the scanning unit over 360°, the wavelength selector is set up to select a different wavelength, e.g. to pivot a first optical filter selecting for incident irradiation having a first wavelength out of the optical path and to pivot a second optical filter selecting for incident irradiation having a second wavelength into the optical path.

In an alternative embodiment, the scanning unit can comprise or consist of a digital micromirror device (DMD) or e.g. a flip mirror.

The method for imaging IR and/or microwave irradiation in step a. comprises selecting at least two wavelengths from incident irradiation, i.e. at least a first wavelength and a second wavelength, e.g. by means of a wavelength selector which is arranged in the optical path of the incident irradiation. Therein optionally, the incident irradiation can be irradiation which is already moved and directed, e.g. irradiation which according to step b. has passed by a scanning unit which is arranged in the optical path upstream of a wavelength selector, so that steps a. and b. of the method for imaging IR and/or microwave irradiation are in reversed order.

The method for imaging IR and/or microwave irradiation comprises in a step b. moving and directing incident irradiation over the detector by means of a scanning unit which is arranged in the optical path of the incident irradiation. Therein, the moving and directing optionally comprises rotating the scanning unit around its rotational axis fully over 360° in a first direction, e.g. clockwise, in order to move and direct incident irradiation of a first wavelength over the detector, and subsequently rotating the scanning unit around its rotational axis fully over 360° in a second direction, e.g. counter-clockwise, in order to move and direct or resp. scan incident irradiation of a second wavelength over the detector, and optionally further rotating around its rotational axis over 360° in at least one further direction in order to move and direct or resp. scan incident irradiation of the at least one further wavelength over the detector. Therein, the first and second and optional at least one further rotational directions can be opposite directions, e.g. clockwise and counter-clockwise, or can be the same direction.

The invention further relates to a detector, which as described herein can be independent from other optical components. Alternatively, as part of the device for imaging incident irradiation, the detector together with the wavelength selector and scanning unit is arranged in the common optical path, e.g. at the end of the optical path comprising the wavelength selector and the scanning unit.

The detector is generally set up to detect incident irradiation, which e.g. by selection by the wavelength selector has at least two wavelengths, and to generate first electrical signals from detected incident irradiation of the first wavelength, to generate second electrical signals from detected incident irradiation of the second wavelength, optionally to generate at least one further electrical signal from detected incident irradiation of the at least one further wavelength, and to transfer the first and second and optional further electrical signals to an analysing unit.

Generally, the detector is set up to detect the at least two different wavelengths from incident irradiation and to generate at least two electrical signals which correspond to the at least two wavelengths, i.e. first electrical signals corresponding to the detection of the first wavelength, second electrical signals corresponding to the detection of the second wavelength, and optionally at least one further electrical signal corresponding to the detection of the at least one further wavelength, to be transferred to the analysing unit. Preferably, the detector is set up to detect more than one of the at least two wavelengths, preferably all of the at least two wavelengths, at the same time and to simultaneously generate the at least two corresponding electrical signals. Alternatively, the detector can be set up to sequentially detect the at least two wavelengths and to sequentially generate the at least two corresponding electrical signals.

Generally, the detector comprises a carrier substrate having recesses in one of its surfaces, which recesses can be blind holes or through holes. Generally, the recesses can have a width of at least 50 nm up to 200 µm and a depth of at least 20 µm up to 70 µm, and the recesses can be spaced apart from one another by at least 50 nm up to 50 µm. In each recess, a semiconductor crystal can be arranged, preferably embedded in a polymer, wherein preferably the polymer is grown around the semiconductor crystal from a polymer solution which can be acidic. Therein, the polymer is preferably selected from the group comprising dendrimers, nanocarbon tubes, polyacetylene, fullerenes, melamine, poly(amidoamine) (PAMAM), polytetrafluoroethylene, non-polar polymers, fluoropolymers, fluorocarbons, and mixtures of at least two of these, and the polymer solution, optionally acidic, preferably further comprises carboxylate sodium salt, sodium borohydride and/or hydrogen sulphide. Preferably, the carrier substrate comprises or consists of glass, silicon and/or insulator, and has a thickness of at least 5 µm up to 100 µm. Further preferably, the detector has additional layers, namely crystalline silicon (c-Si).

The detector can comprise a first semiconductor material, e.g. for the detection of IR irradiation. Alternatively or additionally, the detector can comprise a second semiconductor material, e.g. for the detection of microwave irradiation. The first semiconductor material preferably is a III-V semiconductor material, in particular gallium arsenide (GaAs). The second semiconductor material is preferably selected from the group containing iron disulphide (FeS₂), magnetite (Fe₃O₄), greigite (Fe₃S₄), maghemite (γ-Fe₂O₃), iron (II)-oxide (FeO), sulphur (Ss), silicon carbide (SiC), sulphur ferro oxidise, e.g. a sulphur-iron-oxygen crystallizable semiconductor compound, especially having the chemical formula Fe₂S₂O₄.

Such a detector has the advantage that it can detect a broad range of incident IR and/or microwave irradiation wavelengths while having a reduced requirement for cooling.

Each of the first and second semiconductor materials can be formed as separate semiconductor crystals, wherein preferably a single semiconductor crystal is arranged within each of the recesses in the surface of the detector. Therein, each semiconductor crystal preferably has a length of at least 0.5 × 10⁻⁹ m, e.g. up to 5 × 10⁻⁹ m, and a diameter of at least 0.5 × 10⁻⁷ m, e.g. up to 5 × 10⁻⁷ m.

In a preferred embodiment, the semiconductor crystals from the first and resp. second semiconductor material are arranged within the recesses of the detector in a matrix, especially in an alternating manner, e.g. alternating for each adjacent recess or alternating by rows, or alternatingly arranged groups of recesses with each group having only one kind of semiconductor material, e.g. in a matrix arrangement, e.g. alternatingly, e.g. in a chessboard pattern or in a row-by-row-pattern.

In an alternative embodiment, the detector has at least two sections, wherein in a first section each recess contains a semiconductor crystal from the first semiconductor material and in a second section each recess of the detector contains a semiconductor crystal from the second semiconductor material. Therein, the detector in a first section is set up to detect incident IR irradiation, and in a second section the detector is set up to detect incident microwave irradiation. Therein, the detector sections can be physically separated, e.g. the detector sections can be arranged on separate carrier substrates which may be spaced apart from one another.

In further alternative embodiments, the detector can comprise only the first semiconductor material, wherein the detector is set up to detect at least two wavelengths of IR irradiation and no microwave irradiation, or can comprise only the second semiconductor material, wherein the detector is set up to detect at least two wavelengths of microwave irradiation and no IR irradiation.

Generally, the detector comprises at least 2 microwires, preferably at least 50, at least 100 or at least 500 microwires, e.g. up to 100.000.000 microwires, which are generally arranged over the recesses in the surface of the detector. Therein preferably, over each recess at least one microwire is arranged. The microwires can be from semiconductor material, e.g. from first semiconductor material or from second semiconductor material, or can e.g. be from copper. Preferably, the GaAs or silicon, e.g. in the form of microwires or in the form of a structured substrate produced by etching, preferably after grey-scale lithography, consists of amorphous material, e.g. amorphous semiconductor material, so that they are set up to avoid reflection of incident irradiation to be detected.

Generally preferably, each microwire is arranged with its centre over a recess in the surface of the detector. Further preferably, each microwire with its one end contacts an independent first electrical wire and with its other end contacts an independent second electrical wire. In a preferred embodiment, at least two microwires are arranged over each recess, e.g. in parallel or at an angle of at least 5°, preferably at least 10° or at least 20° up to 90°, e.g. 45° to one another.

Each microwire preferably has a length of at least 100 µm or at least 150 µm, e.g. up to 300 µm or up to 200 µm, and a thickness of at least 10 µm or at least 20 µm, e.g. up to 70 µm or up to 30 µm, e.g. 20 µm. Because the sensitivity and resolution of the detector increases with the number of microwires, it is advantageous that the detector has a high number of microwires.

Preferably, the microwires are arranged as a grid in one plane having a first set of parallel microwires and at an angle of at least 5° up to 90° thereto a second set of parallel microwires on the detector, wherein the distance between parallel microwires is at least 50 nm, preferably at least 100 nm, e.g. at least 1 µm, up to 500 µm, preferably up to 300 µm, e.g. up to 100 µm.

Generally, the absorbance wavelength of a microwire of the detector is specified by its length. Therein, the length of the microwires is proportional to the wavelength of the incident irradiation to be detected, wherein shorter microwires are set up to detect incident irradiation having a shorter wavelength and longer microwires are set up to detect incident irradiation having a longer wavelength. Consequently, it is preferred that the microwires are not of uniform length but rather have different lengths.

In the embodiment of the detector comprising semiconductor crystals, the microwires preferably contact the semiconductor crystals. Especially preferably, the microwires are arranged so that all semiconductor material crystals are contacted by at least one microwire or preferably by exactly two microwires.

In a preferred embodiment, on the detector surface having recesses, electrical wires are arranged which on one end are connected to an end wire and on the other end are connected to a microwire. Preferably, electrical wires are not arranged in the area of the recesses, and further preferably each electrical wire is arranged with one of its ends at a border of a recess.

Preferably, the detector comprises an array of at least 2 sensor elements, preferably at least 5, at least 10, at least 50 or at least 100 sensor elements, e.g. 16 sensor elements, each sensor element having a surface comprising recesses, and having a circumference which preferably is rectangular, e.g. square. Preferably, the sensor elements of the detector are arranged along the edges of a positions array, which array further preferably is uniformly spaced. The sensor elements preferably comprise or consist of semiconductor material, which can be formed as semiconductor crystals which are preferably arranged within the recesses in the surface of the sensor elements, and/or can be formed as microwires which are preferably arranged over the recesses in the surface of the sensor elements. Therein, it is preferred that each sensor element comprises at least 50 or at least 100, e.g. up to 10.000 microwires, wherein preferably the microwires with the electrical wires are arranged as a grid in one plane, preferably having a first set of parallel microwires and at an angle of at least 5°, preferably at least 10°, up to 90°, preferably up to 70°, e.g. at 45° thereto a second set of parallel microwires, over the surface of the sensor element and the at least one end wire is arranged around the circumference of the sensor element.

As generally preferred, the detector is produced by a process comprising or consisting of the steps of
- providing a carrier substrate having recesses, wherein the carrier substrate is preferably glass or silicon,
- optionally producing semiconductor crystals, preferably exactly one semiconductor crystal for each recess of the carrier substrate, which semiconductor crystals preferably consist of one of the first and/or second semiconductor materials, preferably by chemical vapour deposition or reactive ion etching, and arranging the semiconductor crystals in the recesses of the carrier substrate, preferably one semiconductor crystal in each of the recesses,
- optionally applying polymer solution, preferably acidic polymer solution, to the carrier substrate, preferably to fill each of the recesses, preferably by chemical vapour deposition or etching, e.g. reactive ion etching, e.g. using a mixture comprising nitric acid (HNO₃) and/or hydrofluoric acid (HF), preferably in aqueous solution, with incubating for at least 1 d, preferably at least 2 d, e.g. up to 3 d or up to 28 d, each +/-1 d, to generate a polymer, wherein the carrier substrate optionally has semiconductor crystals arranged in its recesses,
- producing microwires, which preferably are arranged as a grid in one plane and/or which are embedded in a silicon wafer, i.e. in a microchip, and arranging the microwires over the recesses of the carrier substrate, which recesses optionally contain semiconductor crystals and/or optionally contain polymer, wherein generally preferably each semiconductor crystal is contacted by at least one microwire,
- arranging at least one electrical wire, preferably at least 2 electrical wires, more preferably at least 2 electrical wires for each microwire, on the surface of the carrier substrate and/or embedded within the carrier substrate, wherein preferably each electrical wire is arranged to be in contact with at least one microwire, preferably in contact with exactly one microwire.

As generally preferred, in a first embodiment the microwires of the detector can be produced by chemical vapour deposition, in particular by depositing semiconductor material in a 3-D mould. In an alternative second embodiment, the microwires can be produced by etching a 3-D structure into a semiconductor substrate.

According to the first embodiment, microwires are preferably produced by a process comprising the steps of
- generating a 3-D mould having cavities,
- depositing semiconductor material, preferably gallium arsenide, into the cavities of the 3-D mould to generate a filled 3-D mould, and
- separating the semiconductor material from the 3-D mould, preferably by removing material of the filled 3-D mould with optional subsequent heating, to generate the microwires,
or consisting thereof.

Therein preferably, the 3-D mould is generated by a process comprising the steps of
- applying a layer of photoresist material, which is preferably a light-sensitive compound, which can e.g. be an azidoquinone, e.g. diazonaphthoquinone (DQ), onto a substrate, which preferably consists of silicon and/or GaAs,
- providing a mould mask comprising or consisting of borosilicate glass or quartz with a sputter deposited chrome layer on top, and/or which is preferably made from a light-resistant material, e.g. polymer, solvent, sensitizers, and/or additives, onto the layer of photoresist material to generate a masked layer,
- applying radiation onto the masked layer to generate a radiated layer, optionally removing the mould mask,
- optionally heating the radiated layer, and
- etching, preferably by reactive ion etching, the radiated layer to generate the 3-D mould,
or consisting thereof.

For the detector, the substrate, GaAs or silicon, after coating with photoresist, for structuring preferably is irradiated with grey-scale lithography, preferably using UV irradiation onto the photoresist, followed by reactive ion etching. Therein, the grey-scale lithography, e.g. at a wavelength of UV irradiation, is used to irradiate circular areas with an irradiation intensity decreasing or alternatively increasing with decreasing radius of each circular area. The grey-scale lithography onto the photoresist with an irradiation intensity that decreases, or increases, with decrease of the radius of each circular area after removal on non-irradiated photoresist, during the subsequent etching, preferably reactive ion etching, results in the substrate, GaAs or silicon, having a structure of thickness that is inversely proportional to the irradiation intensity applied onto the photoresist, e.g. in a structure of the detector, preferably in a structure comprising microwires of GaAs or silicon, preferably each arranged in recess of a carrier substrate, which can be the same GaAs or silicon substrate. Alternatively, the structure can comprise or consist of a matrix arrangement, e.g. of protrusions consisting of the substrate, e.g. GaAs or silicon, the protrusions having a thickness that increases with decrease of the radius of each protrusion, the radius extending from the center of the protrusion. The protrusions can e.g. have circular or angular circumference, e.g. e.g.. cover a circular or a rectangular or e.g. a hexagonal area. Each of the protrusions can have a cross-section or thickness which with a continuous slope or in steps decreases with increase of its radius, e.g. forming a collecting lens. The protrusions preferably are arranged on a carrier substrate and are separated from each other by recesses, and each protrusion is preferably contacted separately by an electrode. The resulting structured substrate can be arranged on a carrier substrate, e.g. silicon or glass. Alternatively, the substrate prior to the grey-scale lithography and etching can be arranged on a carrier substrate such that protrusions of the substrate, GaAs and/or silicon remain on the carrier substrate.

The photoresist material is preferably applied onto the substrate by spin-coating and subsequent drying, e.g. by heating, e.g. to 110 °C for 1 minute per each 1 µm thickness of the photoresist layer. The radiation that is applied onto the masked layer can be UV radiation, e.g. having a wavelength of e.g. 435 nm (g elements), 405 nm (h), and/or 365 nm (I line). By applying the radiation for 5 minutes, preferably for 1 minute per each 1 µm thickness of the photoresist layer, the photoresist material is altered in those areas which are not covered by the mould mask, and is conserved in those areas which are covered by the mould mask, wherein altered photoresist material preferably is more resistant against etching than conserved photoresist material, or alternatively altered photoresist material preferably is less resistant against etching than conserved photoresist material. The radiation can have a different intensity in different areas to be etched (grayscale lithography), e.g. an intensity in the range of 0 to 10⁸ cd. The optional heating can e.g. be to 110 °C, preferably to 120 °C for 5 minutes, preferably for 1 minute per each 1 µm thickness of the photoresist layer.

The etching is preferably carried out by applying, e.g. by spraying or by pushing towards the surface of the radiated layer, a first etching solution, which can e.g. be 10 mM tetramethylammonium hydroxide in water or preferably a mixture comprising nitric acid (HNO₃) and/or hydrofluoric acid (HF), preferably in aqueous solution, onto the radiated layer and incubating for 1 minute, preferably for 5 minutes, thereby dissolving one of the altered materials and the conserved material and optionally dissolving the mould mask, while not dissolving the other one of the altered material and the conserved material, wherein the areas of dissolved material form the cavities of the 3-D mould and the areas of non-dissolved material form the material of the 3-D mould or resp. the material of the filled 3-D mould. It is generally preferred that the 3-D mould consists of the substrate material, e.g. silicon, and contains no residue of photoresist material or mould mask material.

After depositing the semiconductor material into the cavities of the 3-D mould, e.g. by chemical vapour deposition, or by mixing a mixture comprising nitric acid (HNO₃) and/or hydrofluoric acid (HF), preferably in aqueous solution, the 3-D mould is removed, preferably by applying, e.g. by spraying with or immersing in, a second etching solution, which can e.g. be 10 mM tetramethylammonium hydroxide in water, or which can be a mixture comprising nitric acid (HNO₃) and/or hydrofluoric acid (HF), preferably in aqueous solution, acting onto the surface of the filled 3-D mould, and incubating for 1 minute, preferably for 5 minutes, with optional subsequent heating to e.g. 330 °C for 5 minutes, preferably for 15 minutes, to produce the microwires, which are preferably free from residual material of the 3-D mould, more preferably consist of the semiconductor material only, preferably are arranged as a grid in one plane or in a pyramidal shape, or e.g. in the shape of a Fresnel lens.

According to the alternative second embodiment, the microwires can be produced by a process comprising the steps of
- applying a layer of photoresist material, which is preferably a light-sensitive compound, e.g. comprising tert-butoxycarbonyl (Boc) and/or methyl methacrylate, onto a semiconductor substrate, which is preferably made from gallium arsenide,
- providing a mould mask, which is preferably made of a light-resistant material, e.g. can comprise or consist of quartz, glass, SiO₂ on Si, and/or can comprise or consist of polymers such as PET, PC, onto the layer of photoresist material to generate a masked layer,
- applying radiation onto the masked layer to generate a radiated layer, optionally removing the mould mask,
- optionally heating the radiated layer, and
- etching the radiated layer to produce the microwires,
or consisting thereof.

By this alternative process, the microwires are produced directly from the semiconductor substrate, and the etching removes semiconductor material from the substrate in order to produce microwires. Therein, it is preferred that
- the photoresist is applied to the substrate by spin-coating and subsequent drying, preferably by heating, e.g. to 110 °C or to 120 °C for 10 min, preferably for 20 min,
- the mould mask is made from quartz, glass, thick SiO₂ on Si, polymers such as PET, PC (polycarbonate), by applying a high light intensity laser beam (approx. 10¹⁰ to 10¹¹ mW/cm in laser diodes),
- the radiation is UV radiation having a wavelength of 305 nm, which is applied for at least 5 min, preferably for 15 min,
- the optional heating is carried out to a temperature of 120 °C for 15 min, and/or
- the etching is carried out by reactive ion etching, especially for 5 min, preferably for 15 min,
- wherein it is preferred that this process is carried out at a temperature of 4 °C up to 20 °C, and/or preferably without heating of the substrate, in particular without heating to above room temperature.

Generally preferred, each of the opposing surfaces of the structured substrate of GaAs or silicon are electrically contacted, e.g. by an optically transparent electrode layer on one surface, and as another electrode a further conductor on the opposing surface, preferably each protrusion is separately electrically contacted.

It is generally preferred that the device for imaging IR irradiation has the detector arranged adjacent to an interposer chip, preferably centered thereon, further preferably the interposer chip is arranged between the detector and a circuit board, which may be a printed circuit board. Therein preferably, the detector at least sectionally contacts the interposer chip in an electrically conductive manner by means of the at least one electrical wire, more preferably every electrical wire of the detector contacts the interposer chip by means of an electrically conductive connection that is insulated from other electrically conductive connections between the detector and the interposer chip.

Generally, the detector can have a quadratic shape, e.g. having a size of 3 × 3 mm, preferably 5 × 5 mm. The interposer chip can have a quadratic shape, e.g. having a size of 10 × 10 mm, preferably 20 × 20 mm.

In the method for imaging IR and/or microwave irradiation, the step c. of detecting incident irradiation of the at least two wavelengths to generate at least two corresponding electrical signals and transferring the at least two electrical signals to an analysing unit is generally accomplished by a detector which is connected to an analysing unit, e.g. by means of an electrical connection, e.g. via an interposer chip and/or a circuit board. In particular, incident irradiation, which is selected for having at least two wavelengths and which is moved and directed or resp. scanned over the detector, hits the detector, preferably hits the semiconductor material and through a photoelectric effect generates at least two corresponding electrical signals which in turn are transferred to the analysing unit via the electrical connection.

The cooling unit can comprise a cooling fluid and/or can comprise at least one ventilator. Optionally, the cooling unit is set up to cool to a temperature of at maximum 1 K below ambient temperature only by means of at least one ventilator and without any cooling fluid other than air. Therein, ambient temperature is defined as the temperature of air around the detector, e.g. the temperature inside of a housing in which the detector is arranged.

In the embodiment of the device having a rotatable double prism as scanning unit, the device has the advantage that only the detector requires cooling, i.e. the scanning unit and wavelength selector can operate at ambient temperature without additional cooling. In this embodiment, the cooling device is set up to only cool the detector.

In the embodiment of the device having a detector containing microwires and/or semiconductor crystals made of GaAs or of a sulphur-iron-oxygen crystallizable semiconductor compound, especially having the chemical formula Fe₂S₂O₄, the device has the additional advantage that the use of liquid nitrogen or similar liquids for cooling can be omitted from the cooling unit and cooling of the detector thus requires less energy and/or natural resources. Thus, in embodiments of the device comprising GaAs as a first semiconductor material, the cooling unit preferably does not comprise liquid nitrogen cooling and optionally applies no cooling fluid other than air, preferably ambient air.

As part of the device, the detector is electrically connected to an analysing unit for processing electrical signals. Generally, the analysing unit is set up to receive the at least two electrical signals from the detector, and to convert each of the at least two electrical signals to separately generate at least two images corresponding to the at least two electrical signals, i.e. to convert the first electrical signals to generate a first image and to convert the second electrical signals to separately generate a second image, and optionally to convert the at least one further electrical signal to separately generate at least one further image. Generally, the at least two images consist of pixels. Therein, the at least two electrical signals are preferably converted in a positionally corresponding manner, so that a given point of the detector to be hit by incident irradiation, e.g. a given semiconductor crystal, positionally corresponds to a distinct region, e.g. to one pixel or a fraction thereof, in the image to be generated by the analysing unit. The analysing unit converts the at least two electrical signals e.g. by means of a circuit board, which may be a printed circuit board.

Generally, the analysing unit is further set up to generate a positionally accurate overlay of the at least two images as a first picture. A device that generates the first picture from an overlay of at least two images has the advantage that it generates sharper pictures having less noise and a higher resolution than IR and/or microwave detection devices from prior art.

The method for imaging infrared irradiation accordingly comprises the step d. of separately generating at least two corresponding images from the at least two electrical signals in the analysing unit. Therein, the images can be generated sequentially or simultaneously.

Optionally, step c. further comprises repeating the detection of each of the at least two wavelengths for at least a second time, and step d. further comprises for each of the at least two wavelengths averaging the detected signals from the repeated detection to generate at least two corresponding averaged electrical signals, and separately generating the at least two corresponding images from the at least two averaged electrical signals. Accordingly, the device is optionally set up to repeat detection of each of the at least two wavelengths, e.g. by rotating a double prism by at least 180°, e.g. by 360° or by a multiple of 360°, e.g. 720°, 1080° or 1440°, while detecting each of the at least two wavelengths, wherein preferably one rotation of the double prism by 360° corresponds to one repeat of detection, and for each repeat for each wavelength to generate corresponding electrical signals to be transferred to the analysing unit. In this embodiment, the analysing unit is set up to receive the corresponding electrical signals for all repeats of the detection of each of the at least two wavelengths, and to generate an averaged electrical signal for each of the at least two wavelengths, e.g. for each pixel or for each electrical signal corresponding to a semiconductor crystal, before separately generating the at least two images.

It was found that a scanning unit, preferably comprising or consisting of a rotating double prism, increases the sensitivity of the device by at least 40 to 50% as determined for the resulting signal for incident IR or microwave irradiation.

In a subsequent step e. of the method for imaging infrared and/or microwave irradiation, a first picture is generated in the analysing unit by generating a positionally accurate overlay of the at least two images, each image corresponding to the detection of incident irradiation having one of the at least two wavelengths.

Optionally, the analysing unit has a neural network which is set up to interpret and edit the first picture in order to generate a second picture. Because IR and/or microwave irradiation is absorbed and resp. scattered by water to a greater degree than visible irradiation, the transmission of IR and/or microwave irradiation to the detector is limited. Therefore, certain wavelengths or wavelength bands of IR and/or microwave irradiation are poorly transmitted, which results in pictures having low contrast and/or low sharpness. The first picture therefore can be edited by the neural network in order to compensate for poor light transmission and high scattering through water, and to enhance picture quality, in particular contrast and sharpness. Therein preferably, the neural network is set up to receive pixel brightness and/or contrast separately for each image, preferably for each pixel of each image, and/or for each pixel of the first picture as input variables, to weigh the input variables by differences in the contrast and to edit pixel brightness and/or contrast in order to generate a second picture.

Accordingly, the method for imaging infrared and/or microwave irradiation accordingly comprises the optional step f. of interpreting and editing the first picture with a neural network to generate a second picture in the analysing unit, which compared to the first picture has increased sharpness and/or contrast, wherein the neural network is set up to receive pixel brightness and/or contrast separately for each pixel of each image and/or for each pixel of the first picture as input variables, to weigh the input variables by differences in the contrast and to edit pixel brightness and/or contrast in order to generate the second picture.

The device or resp. the detector can be for use in the non-destructive testing of material samples, e.g. as a detector of IR irradiation and/or microwave irradiation in non-ionizing direct imaging testing to determine the structural integrity of a sample. Therein, it is preferred that microwave irradiation is applied onto a sample to be tested. Generally, the device can be set up for generating a picture of the surface of the sample (C-Scan) and/or for generating a picture of the cross-section of the sample (B-Scan). Therein, in a first embodiment, the microwave irradiation applied onto the sample can be directly detected by the device or resp. the detector. In an alternative second embodiment, the microwave irradiation after passing through the sample is optionally absorbed by a foil. Due to absorbing the microwave irradiation, the temperature of the foil increases. The change in temperature of the foil then elicits a change in IR irradiation emitted by the foil, which IR irradiation in turn can be detected by use of the detector or resp. the device.

The invention is now described in more detail with reference to the Figures which schematically show in
- Fig. 1 a view of an embodiment of the invention,
- Fig. 2 an embodiment of the scanning unit,
- Fig. 3 a view of an embodiment of the detector,
- Fig. 4 the embodiment of Fig. 3 in top view,
- Fig. 5 a process for producing the irradiation sensitive structured semiconductor of a detector, and in
- Fig. 6 a scanning electron microscopic (SEM) picture of a detector surface.

The device for detecting infrared (IR) and/or microwave irradiation comprises a wavelength selector 2 which together with a scanning unit 3 and a detector 4 is arranged in the common optical path of the incident irradiation 1, which comprises IR and/or microwave irradiation. The wavelength selector 2 is selectively permissive for IR irradiation and/or microwave irradiation, each having one of at least two wavelengths, from the incident irradiation 1, and is not permissive for other irradiation, e.g. UV/Vis irradiation.

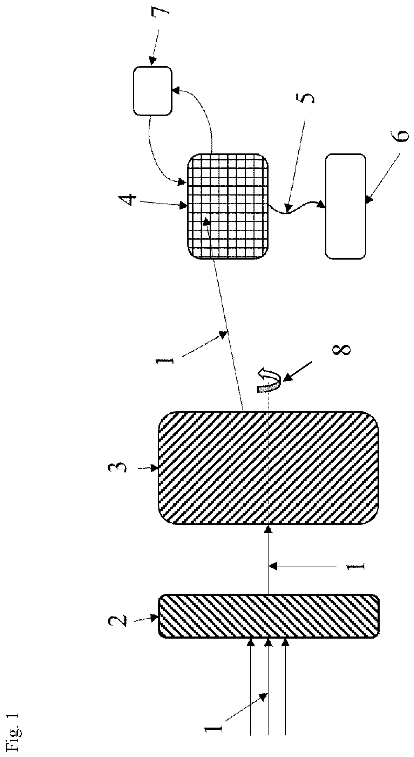

Downstream of the wavelength selector 2, a scanning unit 3 is arranged in the optical path of the incident irradiation 1. The scanning unit 3 is rotatable around the axis 8 corresponding to the optical path in the area of the scanning unit, which axis 8 is represented by a dotted line according to Fig. 1. The scanning unit 3 is set up to move and direct the incident irradiation 1 onto a detector 4.

The detector 4 is arranged downstream of wavelength selector 2 and scanning unit 3 in the optical path of the incident irradiation 1. The detector 4 is set up to detect each of the at least two wavelengths of incident irradiation 1, and to convert detected incident irradiation into at least two corresponding electrical signals 5, each electrical signal 5 for one of the wavelengths, to be transferred to an analysing unit 6, to which the detector is electrically connected. According to the embodiment shown in Fig. 1, the detector 4 is cooled by a cooling unit 7.

The analysing unit 6 is set up to receive the at least two electrical signals 5 from the detector and to generate at least two corresponding images, which are positionally accurate, and to overlay the at least two images to generate a first picture.

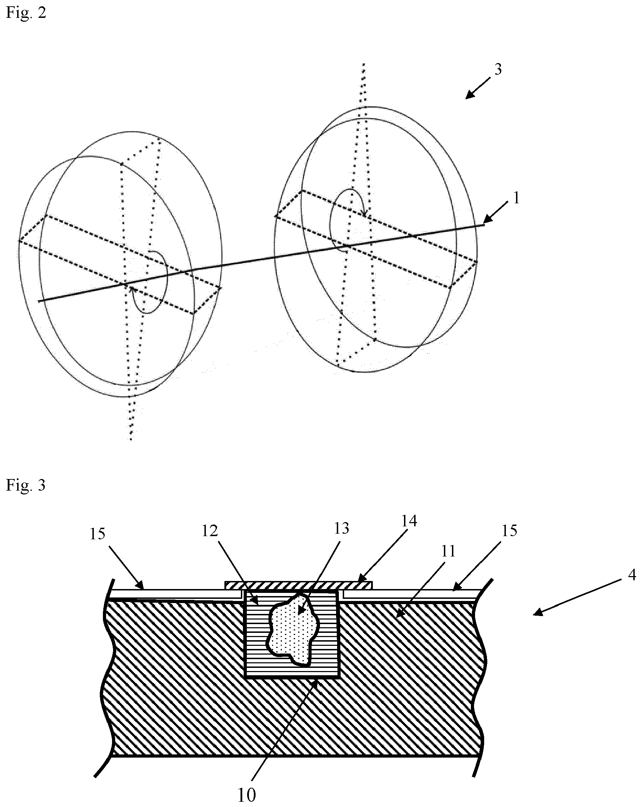

Fig. 2 schematically shows an embodiment of the scanning unit 3, which is formed as double prism. Both prisms of the double prism are arranged in the optical path of the incident irradiation 1, which is shown as solid line. According to Fig. 2, each prism of the double prism has two opposite flat surfaces and a circumferential curved surface. The opposite flat surfaces of each prism are tilted against one another to form a wedge shape, which according to Fig. 2 is indicated by the dotted triangle shape. Each prism of the double prism in the optical path of the incident irradiation 1 has a rectangular cross-section, as indicated by the dashed rectangular shape in Fig. 2. Further, both prisms of the double prism as a combination are rotatable around the axis 8 of the optical path of the incident irradiation 1.

Fig. 3 schematically shows an embodiment of the detector 4. In the surface of its carrier substrate 11, the detector has blind holes as recesses 10. In the recess 10 shown in Fig. 3, a polymer 12 and embedded therein a semiconductor crystal 13 are arranged. A microwire 14 is arranged with its centre over the recess 10 and on each of its ends contacts an independent electrical wire 15. The electrical wires 15 extend over the surface of the carrier substrate 11. Each of the electrical wires 15 on its one end contacts the microwire 14 and on its other end contacts an end wire (not shown in Fig. 3). Contacts of wires 15 according to Fig. 3 are shown as overlaps.

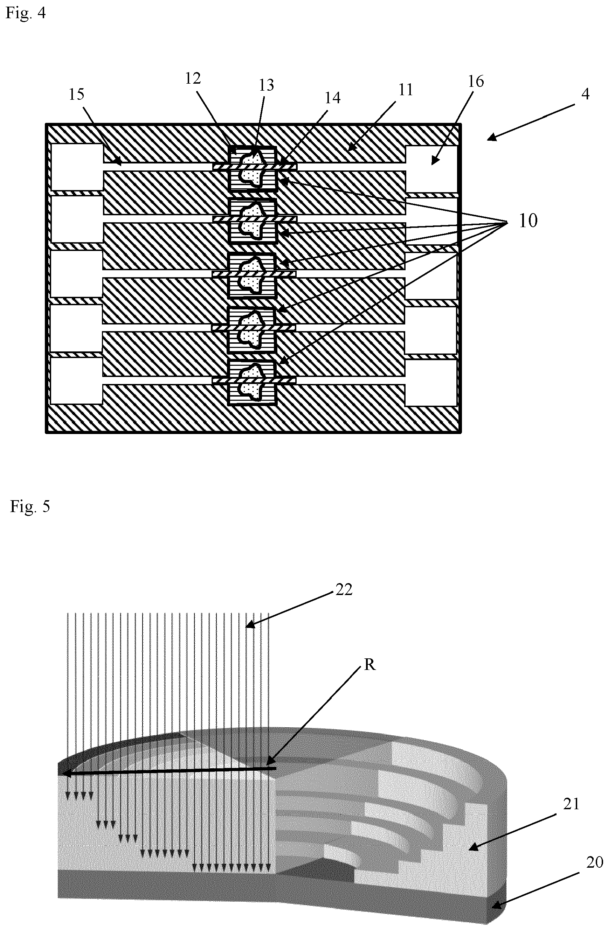

Fig. 4 schematically shows the embodiment of the detector 4 of Fig. 3 in top view. According to Fig. 4, the surface of the carrier substrate 11 has five recesses 10, each containing a polymer 12 and embedded therein one semiconductor crystal 13. Over each recess 10, a microwire 14 is arranged that on each of its ends contacts an independent electrical wire 15. The electrical wires 15 extend over the surface of the carrier substrate 11 into an end region 16 containing a contact surface for an end wire.

Fig. 5 schematically depicts the process of producing a detector using grey-scale lithography with irradiation 22 of different intensities along the radius R of an area of a semiconductor substrate 20, e.g. GaAs, the irradiation being directed onto the photoresist coating 21. The different irradiation 22 intensities are indicated by the lengths of the arrows that are directed onto the photoresist coating 21. Subsequent removal on non-irradiated photoresist 21 results in a photoresist 21 having a thickness that is proportional to the intensity of the irradiation 22. The subsequent etching results in a structure, e.g. a matrix, of protrusions having a thickness that is inversely proportional to the thickness of the photoresist 21.

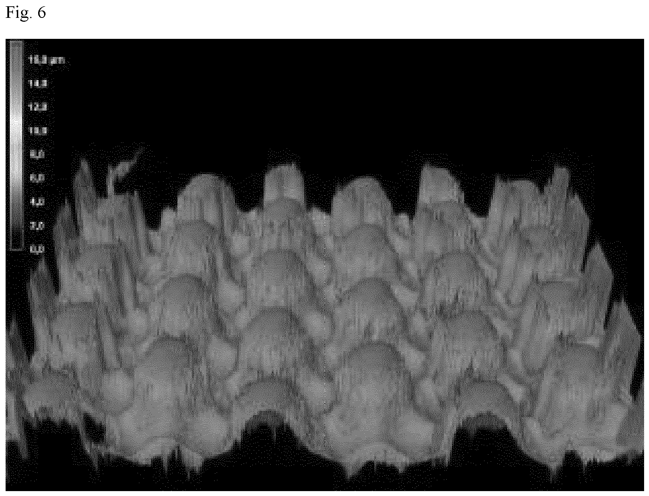

Fig. 6 shows an SEM picture of a GaAs detector surface after grey scale photolithography and reactive ion etching to produce an arrangement of protrusions, each extending in a dome-shape or lens-shape over a carrier substrate or over a common minimal thickness by approx. 14 nm, which protrusions are separated by sections that were removed during the etching process.

## Claims

1. Device for imaging infrared (IR) and/or microwave irradiation comprising a wavelength selector (2), a scanning unit (3) and a detector (4), which are arranged along a common optical path,
wherein the wavelength selector (2) is set up to select at least two wavelengths of IR and/or microwave irradiation, each wavelength independently in the range of between 2 µm and 100 mm, each wavelength having a bandwidth of up to ± 10 % of the wavelength and each of the at least two wavelengths differing from one another by at least 25 % of the shorter wavelength, from incident irradiation (1),
wherein the scanning unit (3) is set up to move and direct incident irradiation (1) over the detector (4), and
wherein the detector (4) is set up to detect incident irradiation (1) of each of the at least two wavelengths to generate at least two corresponding electrical signals (5) and to transfer the at least two electrical signals (5) to an analysing unit (6),
which analysing unit (6) is set up to receive the at least two electrical signals (5) from the detector (4), to separately generate at least two corresponding images from the at least two electrical signals (5), and to generate a positionally accurate overlay of the at least two images as a first picture.

2. Device according to claim 1, **characterized in that** the scanning unit (2) comprises a DMD or a double prism which is rotatable about its rotational axis (8), wherein the prisms of the rotatable double prism are movable and/or pivotable relative to one another.

3. Device according to one of the preceding claims, **characterized in that** the analysing unit (6) has a neural network which is set up to interpret and edit the first picture in order to generate a second picture, wherein the neural network is set up to receive pixel brightness and/or contrast separately for each pixel of each of the at least two images or of the first picture as input variables, to weigh the input variables by differences in the contrast and to edit pixel brightness and/or contrast in order to generate the second picture.

4. Device according to one of the preceding claims, **characterized in that** the detector (4) comprises a carrier substrate (11) having recesses (10) in one of its surfaces, wherein over each recess (10) at least one microwire (14) is arranged, wherein each microwire (14) is arranged with its centre over a recess (10) in the surface of the detector (4), and each microwire (14) with its one end contacts an independent first electrical wire (15) and with its other end contacts an independent second electrical wire (15), wherein each microwire (14) has a length of at least 100 µm up to 300 µm and a thickness of at least 10 µm up to 70 µm.

5. Device according to one of the preceding claims, **characterized in that** the detector (4) comprises an arrangement of protrusions of a III-V semiconductor material, which arrangement of protrusions was produced by grey-scale lithography of a III-V semiconductor material substrate coated with photoresist with subsequent reactive ion etching.

6. Device according to claim 5, **characterized in that** each protrusion or microwire (14) consists of amorphous III-V semiconductor material.

7. Device according to claim 6, **characterized in that** the detector (4) comprises semiconductor material selected from the group containing gallium arsenide (GaAs), iron disulphide (FeS₂), magnetite (Fe₃O₄), greigite (Fe₃S₄), maghemite (γ-Fe₂O₃), iron (II)-oxide (FeO), sulphur (S₈), silicon carbide (SiC), and a sulphur-iron-oxygen crystallizable semiconductor compound, especially having the chemical formula Fe₂S₂O₄.

8. Device according to one of the claims 4 to 7, **characterized in that** the detector (4) in a first section is set up to detect incident IR irradiation, and in a second section the detector (4) is set up to detect incident microwave irradiation.

9. Device according to one of the preceding claims, **characterized by** a cooling unit (7) that is set up to cool the scanning unit (3) and/or the detector (4) and/or the entire device to a temperature of at maximum 1 K below ambient temperature only by means of at least one ventilator and without any cooling fluid other than air.

10. Method for imaging incident irradiation (1), preferably using the device according to one of the preceding claims, the method comprising the steps of
a. selecting infrared (IR) and/or microwave irradiation having at least a first wavelength and a second wavelength, each wavelength independently in the range of between 2 µm and 100 mm, each wavelength having a bandwidth of up to ± 10 % of the wavelength and each of the at least two wavelengths differing from one another by at least 25 % of the shorter wavelength, from incident irradiation (1),
b. moving and directing the incident irradiation (1) over a detector (4),
c. detecting incident irradiation (1) of the at least two wavelengths to generate at least two corresponding electrical signals (5), and transferring the at least two electrical signals (5) to an analysing unit (6),
d. generating at least two corresponding images from the at least two electrical signals (5), and
e. generating a positionally accurate overlay of the at least two images to generate a first picture,
wherein steps a. and b. optionally are in reverse order.

11. Method according to claim 10, further comprising interpreting and editing the first picture with a neural network to generate a second picture, wherein the neural network is set up to receive pixel brightness or contrast separately for each pixel of an image or of the first picture as input variables, to weigh the input variables by differences in the contrast and to edit pixel brightness or contrast in order to generate the second picture.

12. Method according to one of claim 10 to 11, **characterized in that** in step a., a first optical filter is moved into the optical path in order to select the first wavelength, and after selecting the first wavelength the first optical filter is moved out of the optical path and a second optical filter is moved into the optical path in order to select the second wavelength.

13. Method according to one of claims 10 to 12, **characterized in that** step a. further comprises selecting IR and/or microwave irradiation having at least one further wavelength from incident irradiation (1), each sequentially one wavelength after another or at least two wavelengths simultaneously,
**in that** step c. further comprises detecting at least one further wavelength to generate at least one further electrical signal (5) and to transfer the at least one further electrical signal (5) to the analysing unit (6),
**in that** step d. further comprises separately generating at least one further image from the at least one further electrical signal, and
**in that** in step e. the first picture is generated by overlaying the first image with the second image and with the at least one further image.

14. Method according to one of claims 10 to 13, **characterized in that** step b. comprises rotating the scanning unit (3) around its rotational axis (8) fully over 360° in a first direction in order to move and direct incident irradiation (1) of a first wavelength over the detector (4), and subsequently rotating the scanning unit (3) around its rotational axis (8) fully over 360° in a second direction in order to move and direct incident irradiation (1) of a second wavelength over the detector (4).

15. Method according to one of claims 10 to 14, **characterized in that** step c. further comprises repeating the detection of each of the at least two wavelengths for at least a second time, and step d. further comprises for each of the at least two wavelengths averaging the detected signals from the repeated detection to generate at least two corresponding averaged electrical signals, and separately generating the at least two corresponding images from the at least two averaged electrical signals.
